# EUROPÄISCHE PATENTANMELDUNG

(11) **EP 4 509 862 A1**
(43) Veröffentlichungstag der Anmeldung: **19.02.2025**
(21) Anmeldenummer: 23192109.9
(22) Anmeldetag: 18.08.2023
(51) Int. Cl.: G01S 7/02, G01S 7/481, G01S 7/521, G01S 13/931, G01S 15/931, G01S 17/931, G01S 7/40, G01S 7/497, G01S 7/52

(54) **HALTEVORRICHTUNG FÜR EINEN SENSOR**

(71) Anmelder: Olaf und Andre Tünkers GBR, 40880 Ratingen (DE)
(72) Erfinder: DREYER, Christian, 40880 Ratingen (DE)
(74) Vertreter: Feucker, Max Martin

(57) **Zusammenfassung**

Die Erfindung betrifft eine Haltevorrichtung (4) für einen Sensor, umfassend ein Basiselement (1) zum Befestigen der Haltevorrichtung an einer Anlage, ein erstes Lagerteil (2.1), mindestens ein erstes Feststellelement (3.1a, 3.1b) für das erste Lagerteil (2.1), wobei das mindestens eine erste Feststellelement (3.1a, 3.1b) zwischen einem Fixierungszustand und einem gelösten Zustand überführbar ist und wobei das erste Lagerteil (2.1) in dem gelösten Zustand des mindestens einen ersten Feststellelements (3.1a, 3.1b) relativ zu dem Basiselement (1) bewegbar ist, wobei die Haltevorrichtung eine erste Einstellvorrichtung (6.1) umfasst, wobei das erste Lagerteil (1) mittels der ersten Einstellvorrichtung (6.1) im gelösten Zustand des mindestens einen ersten Feststellelements (3.1a, 3.1b) bewegbar ist.

## Beschreibung

Die vorliegende Erfindung betrifft eine Haltevorrichtung für einen Sensor, eine Sensorvorrichtung mit einem insbesondere als Laserscanner ausgebildeten Sensor und einer erfindungsgemäßen Haltevorrichtung sowie ein fahrerloses Fahrzeug mit mindestens einer Sensorvorrichtung.

Das fahrerlose Fahrzeug weist insbesondere eine elektrisch aufladbare Batterie auf und ist motorisch angetrieben, wobei es bevorzugt zum selbständig gesteuerten und/oder manuellen Auf- und Abladen sowie Fördern von Lasten eingerichtet ist. Das Fahrzeug ist insbesondere dazu eingerichtet, in Fertigungsstätten, wie insbesondere im Karosseriebau der Kfz-Industrie, eingesetzt zu werden, wozu die Lasten an (manuell oder über Telekommunikation vorgegebenen) anzusteuernden Positionen auf- und abgeladen werden und zwischen den Positionen mittels des Fahrzeuges befördert werden. Ein solches Fahrzeug kann beispielsweise einen Teleskop-Ketten-Förderer umfassen, welcher in um 180° zueinander versetzten Richtungen aus den seitlichen Umgrenzungslinien des Fahrzeuges ein- und ausfahrbar ist und die aufzunehmende oder abzugebende Last auf ein- oder beidseitig des Teleskop-Ketten-Förderers angeordneten Rollenbahnen auflädt oder an einen Lagerplatz ablädt.

Das Fahrzeug kann ferner ein Chassis umfassen, das an seiner Unterseite an entgegengesetzten Enden Elektromotoren und elektrisch angetriebene Rollen aufweist, die jeweils um eine vertikale Achse in beiden Richtungen um 360° drehbar und elektromotorisch antreibbar sind und zum gesteuerten Fahrbetrieb des Fahrzeuges dienen.

Solche insbesondere im Karosseriebau der Kfz-Industrie eingesetzten Fahrzeuge weisen insbesondere als Laserscanner ausgebildete Sensoren auf, mit denen die in der Umgebung des Fahrzeuges befindlichen Objekte erfasst werden, wobei aufgrund der erfassten Daten eine Steuerung des Fahrzeuges erfolgt. Für eine exakte Positionierung und Steuerung des Fahrzeuges durch die Fertigungsstätte ist es erforderlich, dass der Laserscanner in einer exakt definierten Weise zum Fahrzeug ausgerichtet ist.

Für diese exakte Ausrichtung des Laserscanners zum Fahrzeug sind Haltevorrichtungen bekannt, die ein Basiselement umfassen, mit dem die Haltevorrichtung an dem Fahrzeug befestigt ist. Die Haltevorrichtung umfasst ferner ein erstes Lagerteil und mindestens ein erstes Feststellelement für das erste Lagerteil. Das erste Feststellelement ist so ausgebildet und angeordnet, dass es zwischen einem Fixierungszustand und einem gelösten Zustand überführbar ist, wobei das erste Lagerteil in dem gelösten Zustand des mindestens einen ersten Feststellelements relativ zu dem Basiselement bewegbar ist. Das erste Feststellelement kann beispielsweise eine Schraube sein, mit dem das erste Lagerteil in einer ersten Position relativ zu dem Basiselement fixiert wird. Der mit dem ersten Lagerteil zumindest indirekt verbundene Laserscanner kann also im gelösten Zustand des Feststellelements relativ zu dem Fahrzeug bewegt und somit ausgerichtet werden. Die Bewegung/Ausrichtung des Lagerteils und damit des Laserscanners erfolgt dabei mit der Hand eines Benutzers. Nachdem das Lagerteil bewegt wurde, wird das erste Feststellelement in seinen Fixierungszustand überführt, wodurch das Lagerteil und somit der Laserscanner in ihrer Ausrichtung festgelegt werden. Mittels geeigneter Messinstrumente kann die Ausrichtung des Laserscanners zum Fahrzeug überprüft werden.

Das erste Lagerteil ermöglicht in der Regel lediglich die Bewegung/Ausrichtung des Laserscanners in eine Richtung beziehungsweise um eine erste Achse. Von daher umfassen solche Haltevorrichtungen häufig ein zweites Lagerteil, welches mittels eines zweiten Feststellelements fixiert werden kann und im gelösten Zustand des zweiten Feststellelements zur Ausrichtung des Laserscanners in einer zweiten Richtung oder um eine zweite Achse bewegt werden kann. Da die Lagerteile im gelösten Zustand der zugehörigen Feststellelemente mit der Hand nur sehr grob bewegt werden können, kann ein anfänglicher Ausrichtungsprozess des Laserscanners (mehrfaches Lösen der Feststellelemente, händisches Ausrichten des Laserscanner, Anziehen der Feststellelemente, Überprüfen der Ausrichten) mehrere Stunden dauern.

Aufgabe der vorliegenden Erfindung ist es daher, die mit Bezug zum Stand der Technik geschilderten Nachteile zu beseitigen und insbesondere eine Haltevorrichtung anzugeben, mit der der Ausrichtungsprozess des Sensors verkürzt werden kann.

Eine mögliche Lösung für diese Aufgabe ist mit der Haltevorrichtung mit den Merkmalen des unabhängigen Anspruchs 1 angegeben. Weitere Lösungen und vorteilhafte Weiterbildungen sind in den abhängigen Ansprüchen und in der vorstehenden und nachfolgenden Beschreibung erläutert, wobei einzelne Merkmale der vorteilhaften Weiterbildungen in technisch sinnvoller Weise miteinander kombinierbar sind.

Gelöst wird die Aufgabe insbesondere durch eine Haltevorrichtung für einen Sensor, die ein Basiselement zum Befestigen der Haltevorrichtung an einer Anlage, wie einem fahrerlosen Fahrzeug, ein erstes Lagerteil und mindestens ein erstes Feststellelement für das erste Lagerteile umfasst. Das mindestens eine erste Feststellelement ist zwischen einem Fixierungszustand und einem gelösten Zustand überführbar, wobei das erste Lagerteil in dem gelösten Zustand des mindestens einen ersten Feststellelements relativ zu dem Basisteil bewegbar ist. Die Erfindung zeichnet sich insbesondere gegenüber dem Stand der Technik dadurch aus, dass die Haltevorrichtung eine erste Einstellvorrichtung umfasst, wobei das erste Lagerteil mittels der ersten Einstellvorrichtung im gelösten Zustand des mindestens einen ersten Feststellelements bewegbar ist.

Mit anderen Worten: Die Erfindung sieht in ihrem Grundgedanken vor, dass mit der Einstellvorrichtung eine Einheit vorhanden ist, die manuell oder motorisch antreibbar ist und mit der das erste Lagerteil bei gelöstem Feststellelement kontrolliert, gegebenenfalls nur um sehr kleine Verstellwege bewegt werden kann, so dass eine direkte händische Verstellung des Lagerteils nicht mehr erforderlich ist.

Das Basiselement kann insbesondere eine plattenförmige Gestalt haben und zur Befestigung der Haltevorrichtung an dem fahrerlosen Fahrzeug oder an einer stationären Anlage ausgebildet sein. Hierzu kann das Basiselement insbesondere Durchgangslöcher aufweisen, so dass das Basiselement an einer Anlage angeschraubt werden kann. Es kann auch vorgesehen sein, dass das Basiselement Formschlussgestaltungen aufweist, die mit entsprechenden Formschlussgestaltungen an der Anlage korrespondieren, so dass das Basiselement in einer vorgegebenen Ausrichtung an der Anlage befestigt werden kann.

Das erste Lagerteil ist zumindest indirekt, bevorzugt direkt beweglich an dem Basiselement angebracht. Das erste Lagerteil kann insbesondere linear verschieblich an dem Basiselement gelagert sein. Bevorzugt ist jedoch, dass das erste Lagerteil um eine erste Drehachse drehbeweglich an dem Basiselement angebracht ist. Dabei ist das mindestens eine erste Feststellelement so angeordnet und ausgebildet, dass das erste Lagerteil relativ zu dem Basiselement fixiert werden kann. Hierzu kann beispielsweise eine Aussparung in dem ersten Lagerteil ausgebildet sein, durch welche eine Schraube hindurchreicht, welche in ein Gewinde in dem Basiselement eingreift. Bei einer linear beweglichen Lagerung des ersten Lagerteils ist die Aussparung geradlinig, während bei einer drehbeweglichen Lagerung des ersten Lagerteils zum Basiselement die Aussparung eine Kreisbogenform hat.

Das erste Lagerteil kann beispielsweise ebenfalls plattenförmig sein und entsprechende Befestigungsabschnitte zur Anbringung des Sensors oder eines weiteren Lagerteils aufweisen. Bevorzugt ist das erste Lagerteil bügelförmig und im Querschnitt U-förmig ausgebildet, wobei an den freien Schenkeln des im Querschnitt U-förmigen ersten Lagerteils Befestigungsbereiche zur Anbringung des Sensors oder eines weiteren Lagerteils ausgebildet sind.

Durch Anziehen des beispielsweise als Schraube ausgebildeten Feststellelements kann also das erste Feststellelement in seinen Fixierungszustand gebracht werden, in dem das erste Lagerteil fixiert ist, wobei durch Lösen der Schraube das erste Feststellelement in seinen gelösten Zustand überführt wird, in welchem das erste Lagerteil relativ zu dem Basiselement bewegbar ist. Bevorzugt sind für das erste Lagerteil zwei Feststellelemente, insbesondere als Schrauben vorgesehen.

Damit der Sensor um einen weiteren Freiheitsgrad ausgerichtet werden kann, kann in einer bevorzugten Ausführungsform vorgesehen sein, dass die Haltevorrichtung ein zweites Lagerteil umfasst, welches insbesondere an dem ersten Lagerteil angebracht ist. Das zweite Lagerteil ist prinzipiell beweglich zu dem ersten Lagerteil gelagert. Das zweite Lagerteil kann insbesondere geradlinig und/oder um eine zweite Achse drehbeweglich zu dem ersten Lagerteil gelagert sein.

Hierbei ist insbesondere vorgesehen, dass dem zweiten Lagerteil mindestens ein zweites Feststellelement zugeordnet ist, mit welchem das zweite Lagerteil in einer gewünschten Position relativ zu dem ersten Lagerteil fixiert werden kann. Auch das mindestens eine zweite Feststellelement kann beispielsweise durch eine Schraube realisiert sein, welche durch eine Aussparung in dem zweiten Lagerteil hindurchreicht und in ein in dem ersten Lagerteil ausgebildetes Gewinde eingreift. Die Aussparung kann bei einer geradlinigen Relativbewegung des zweiten Lagerteils zum ersten Lagerteil geradlinig ausgebildet sein und bei einer drehbeweglichen Relativbeweglichkeit des zweiten Lagerteils zum ersten Lagerteil (kreis-)bogenförmig ausgebildet sein. Auch das mindestens eine zweite Feststellelement kann durch Anziehen in einen Fixierungszustand gebracht werden, in dem das zweite Lagerteil zu dem ersten Lagerteil fixiert ist. Das zweite Feststellelement kann durch Lösen in einen gelösten Zustand überführt werden, in dem das zweite Lagerteil relativ zu dem ersten Lagerteil beweglich ist.

Dem zweiten Lagerteil ist zudem bevorzugt eine zweite Einstellvorrichtung zugeordnet, mit welcher das zweite Lagerteil im gelösten Zustand des mindestens einen zweiten Feststellelements relativ zu dem ersten Lagerteil bewegbar ist. Die zweite Einstellvorrichtung ist insbesondere an dem ersten Lagerteil angebracht, wobei durch Betätigen der zweiten Einstellvorrichtung das zweite Lagerteil relativ zu dem ersten Lagerteil bewegbar ist. Somit kann auch das zweite Lagerteil bei gelöstem zweiten Feststellelement kontrolliert, gegebenenfalls nur um sehr kleine Verstellwege bewegt werden, so dass eine direkte händische Verstellung auch des zweiten Lagerteils nicht mehr erforderlich ist.

In einer besonders bevorzugten Ausführungsform ist das erste Lagerteil im gelösten Zustand des mindestens einen ersten Feststellelements um eine erste Drehachse drehbar und das zweite Lagerteil im gelösten Zustand des mindestens einen zweiten Feststellelements um eine zweite Drehachse drehbar, wobei bevorzugt das erste Lagerteil drehbar an dem Basiselement gelagert ist und das zweite Lagerteil drehbar an dem ersten Lagerteil gelagert ist und ferner bevorzugt die erste Drehachse und die zweite Drehachse in einem rechten Winkel zueinander ausgerichtet sind. Dabei ist die erste Drehachse insbesondere orthogonal zu einem Basisabschnitt des Basiselements und somit orthogonal zu einer äußeren Ebene der Anlage ausgerichtet, an der die Haltevorrichtung angebracht ist. Die zweite Drehachse ist wiederum parallel zu dieser Anbringungsebene ausgerichtet. Hierbei kann insbesondere vorgesehen sein, dass sowohl das erste Lagerteil als auch das zweite Lagerteil bügelförmig und im Querschnitt U-förmig sind, wobei die erste Drehachse in etwa parallel zu den freien Schenkeln der U-förmigen Lagerteile ausgerichtet ist und die zweite Drehachse sich zwischen den freien Schenkeln erstreckt, wobei die zweite Drehachse insbesondere durch entsprechende Ausnehmungen und Vorsprünge an den freien Schenkeln der U-förmigen Bügel vorgegeben ist.

Die erste Einstellvorrichtung und/oder die zweite Einstellvorrichtung umfassen bevorzugt ein rotatorisch betätigbares Einstellelement. Durch rotatorische Betätigung des Einstellelements im gelösten Zustand des entsprechenden Feststellelements erfolgt eine entsprechende Bewegung/Ausrichtung/Verstellung des zugehörigen Lagerteils. Hierbei kann das Einstellelement unmittelbar und direkt auf das zugehörige Lagerteil einwirken. Es kann aber auch vorgesehen sein, dass ein weiteres Element zwischen dem Einstellelement und dem zugehörigen Lagerteil angeordnet ist. Die rotatorische Betätigungsbewegung des Einstellelements kann manuell, beispielsweise mittels eines Schraubenziehers, oder durch einen Aktuator, wie einen Elektromotor, erfolgen.

Die erste und/oder zweite Einstellvorrichtung umfasst insbesondere ein Gehäuseteil, in dem das entsprechende Einstellelement drehbar gelagert ist. Das Gehäuseteil kann einteilig in dem Basiselement oder einem Lagerteil ausgebildet sein. Bevorzugt ist jedoch, dass das Gehäuseteil lösbar an einem Lagerteil oder dem Basiselement angebracht ist. Durch die lösbare Anbringung kann die Einstellvorrichtung auch nachträglich bei bereits bestehenden Haltevorrichtungen nachgerüstet werden.

In einer ersten Ausführungsform wird das Einstellelement durch den rotatorischen Antrieb in seiner axialen Richtung bewegt und wirkt bevorzugt direkt auf ein Lagerteil. Hierzu kann das Einstellelement beispielsweise in einem in dem Gehäuseteil ausgebildeten Innengewinde mit einem Außengewinde eingreifen, so dass das Einstellelement durch einen rotatorischen Antrieb linear bewegt wird. In einer einfachen Ausführungsform ist das Einstellelement als Schraube ausgebildet. Hierbei kann insbesondere vorgesehen sein, dass ein freies Ende des Einstellelements auf das zugehörige Lagerteil wirkt.

In einer dazu alternativen Ausführungsform kann vorgesehen sein, dass auf dem Einstellelement ein Stellelement gelagert ist, welches durch die rotatorische Bewegung des Einstellelements linear bewegbar ist, wobei das Stellelement bevorzugt direkt auf ein Lagerteil wirkt. Hierzu kann beispielsweise vorgesehen sein, dass das rotatorisch antreibbare Einstellelement in dem Gehäuseteil drehbar gelagert ist, wobei das Stellelement mit einem Innengewinde auf dem ein Außengewinde aufweisenden Einstellelement aufgesetzt ist, so dass das Stellelement während der rotatorischen Bewegung des Einstellelements relativ zu dem Gehäuseteil entlang des Einstellelements bewegt wird.

Durch die in beiden Fällen vorliegende Übersetzung einer rotatorischen Bewegung in eine lineare Bewegung kann eine kontrollierte und geringe Verstellung des zugehörigen Lagerteils erreicht werden und damit eine kontrollierte und geringe Ausrichtung/Bewegung des Sensors.

Die Einstellvorrichtung kann manuell, beispielsweise mittels eines Schraubenziehers, angetrieben werden, wobei in diesem Fall das Einstellelement als Schraube ausgebildet ist. Alternativ kann ein insbesondere elektromotorischer Antrieb vorgesehen sein, mit dem die Einstellvorrichtung antreibbar ist. Hierbei kann der elektromotorische Antrieb insbesondere eine Gewindestange oder eine Schraube antreiben, wozu der elektromotorische Antrieb an einem Schraubenkopf der Schraube angebracht sein kann.

Bei der Verwendung eines elektromotorischen Antriebs für gegebenenfalls jedes Einstellelement kann die Ausrichtung des Sensors vollautomatisiert erfolgen, wozu der elektromotorische Antrieb mit entsprechenden Messinstrumenten zur Überprüfung der Ausrichtung insbesondere unter Ausbildung einer Regelschleife gekoppelt werden kann. Nach erfolgreicher Ausrichtung kann das mindestens eine Lagerteil durch manuelles Betätigen des zugehörigen Feststellelements fixiert werden.

Bevorzugt ist der Sensor als Laserscanner ausgebildet und insbesondere an dem zweiten Lagerteil der Haltevorrichtung angebracht.

Die Erfindung sowie das technische Umfeld werden im Folgenden anhand der Figuren beispielhaft erläutert. Es zeigen schematisch
- Figur 1:: eine Aufsicht auf eine Haltevorrichtung mit einem an der Haltevorrichtung angebrachten Laserscanner,
- Figur 2:: eine Seitenansicht der Haltevorrichtung gemäß Figur 1,
- Figur 3:: eine Perspektivansicht einer ersten Ausführungsform einer Einstellvorrichtung,
- Figur 4:: eine Seitenansicht der Einstellvorrichtung gemäß Figur 4,
- Figur 5:: eine Perspektivansicht der Einstellvorrichtung gemäß Figur 3 mit einem ersten Antrieb,
- Figur 6:: eine Perspektivansicht einer zweiten Ausführungsform einer Einstellvorrichtung,
- Figur 7:: eine Seitenansicht der Einstellvorrichtung gemäß Figur 6 und
- Figur 8:: eine Perspektivansicht der Einstellvorrichtung gemäß Figur 6 mit einem daran angebrachten zweiten Antrieb.

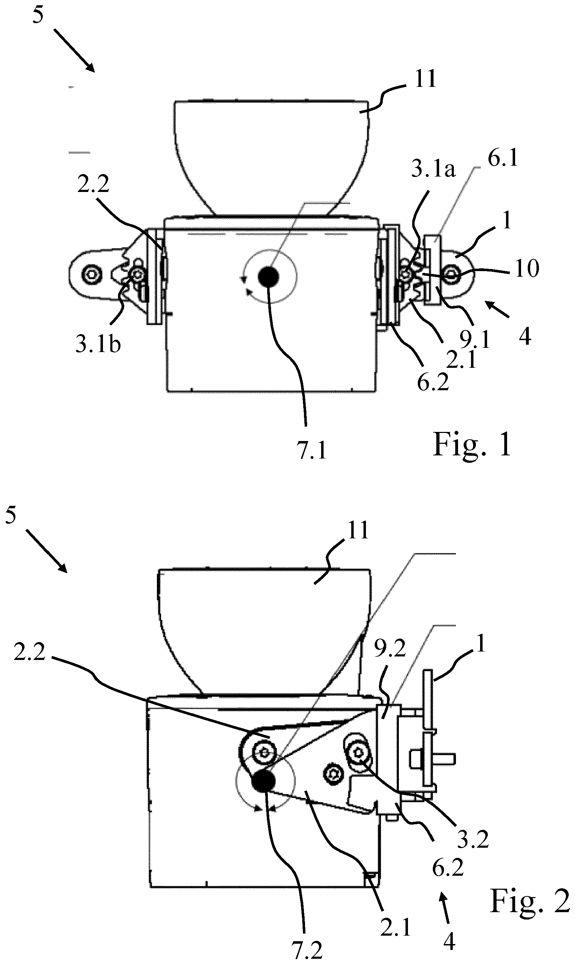

In den Figuren 1 und 2 ist eine Sensorvorrichtung 5 gezeigt, welche eine Haltevorrichtung 4 und einen an der Haltevorrichtung 4 angebrachten Laserscanner 11 umfasst.

Die Haltevorrichtung 4 umfasst ein Basiselement 1, mit dem die Haltevorrichtung 4 an einer Anlage, wie insbesondere an einem fahrerlosen Fahrzeug, angebracht werden kann. Das Basiselement 1 ist plattenförmig ausgeführt und kann an die Anlage angeschraubt werden.

Die Haltevorrichtung 4 umfasst ferner ein erstes Lagerteil 2.1, welches bügelförmig und im Querschnitt U-förmig ausgebildet ist. Das erste Lagerteil 2.1 ist um eine erste Drehachse 7.1 drehbeweglich gelagert. Um eine solche Drehbewegung des ersten Lagerteils 2.1 um die erste Drehachse 7.1 zu blockieren, sind zwei als Schrauben ausgebildete erste Feststellelemente 3.1a und 3.1b vorgesehen, welche das erste Lagerteil 2.1 durchgreifen und in einem in dem Basisteil 1 ausgebildeten Gewinde eingreifen. Die ersten Feststellelemente 3.1a und 3.1b können in einen gelösten Zustand gebracht werden, in welchem das erste Lagerteil 2.1 relativ zu dem Basiselement 1 um die erste Drehachse 7.1 verstellbar ist.

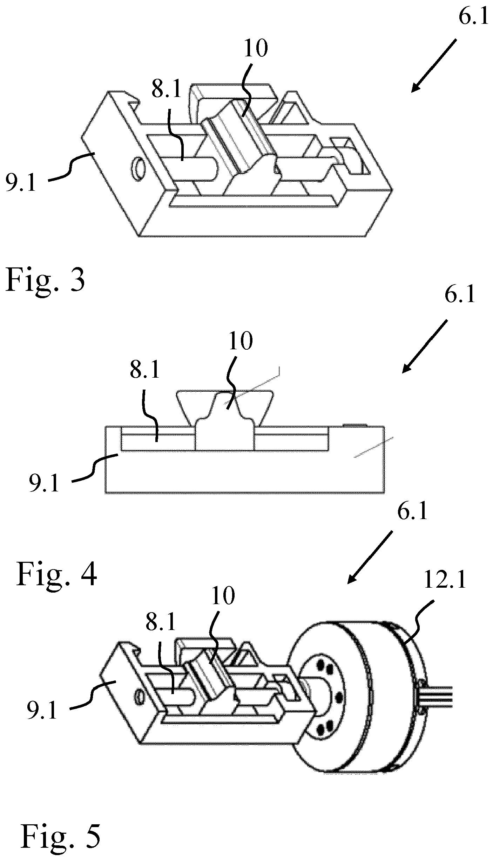

Um das erste Lagerteil 2.1 im gelösten Zustand der ersten Feststellelemente 3.1a und 3.1b relativ zu dem Basiselement 1 zu bewegen, ist eine erste Einstellvorrichtung 6.1 vorgesehen, welche auch in den Figuren 3 bis 5 dargestellt ist.

Die erste Einstellvorrichtung 6.1 umfasst ein erstes Gehäuseteil 9.1, welches lösbar mittels einer Rastverbindung an dem Basiselement 1 befestigt ist. In dem ersten Gehäuseteil 9.1 ist ein erstes Einstellelement 8.1 drehbeweglich gelagert. Das erste Einstellelement 8.1 weist ein Außengewinde auf, auf dem ein Stellelement 10 mit einem Innengewinde aufgesetzt ist. Durch eine Drehung des ersten Einstellelements 8.1 wird das Stellelement 10 entlang des ersten Einstellelements 8.1 linear bewegt.

Wie insbesondere aus Figur 1 ersichtlich ist, ist das Stellelement 10 in Eingriff mit einer zackenartigen Ausgestaltung des ersten Lagerteils 2.1. Durch einen rotatorischen Antrieb des ersten Einstellelements 8.1 wird das Stellelement 10 linear verschoben, wodurch wiederum das erste Lagerteil 2.1 aufgrund des Eingriffs mit dem Stellelement 10 um die erste Drehachse 7.1 verstellt wird.

Die Haltevorrichtung 4 umfasst zudem ein zweites Lagerteil 2.2, welches ebenfalls bügelförmig und im Querschnitt U-förmig ausgebildet ist. Der Laserscanner 11 ist fest mit dem zweiten Lagerteil 2.2 verbunden.

Das zweite Lagerteil 2.2 ist um eine zweite Drehachse 7.2 relativ zu dem ersten Lagerteil 2.1 drehbeweglich gelagert, wozu das erste Lagerteil 2.1 und das zweite Lagerteil 2.2 im Bereich ihrer freien Schenkel miteinander drehbeweglich verbunden sind.

Um das zweite Lagerteil 2.2 relativ zu dem ersten Lagerteil 2.1 zu fixieren, ist ein zweites Feststellelement 3.2 in der Form einer Schraube vorgesehen. Das zweite Feststellelement 3.2 durchgreift eine bogenförmige Aussparung in dem freien Schenkel des ersten Lagerteils 2.1 und ist in eine Gewindebohrung in dem freien Schenkel des zweiten Lagerteils 2.2 eingeschraubt. Durch Anziehen des zweiten Feststellelements 3.2 kann das zweite Feststellelement 3.2 in einen Fixierungszustand gebracht werden, in welchem das zweite Lagerteil 2.2 unbeweglich zu dem ersten Lagerteil 2.1 ist. In einem gelösten Zustand des zweiten Feststellelements 3.2 kann das zweite Lagerteil 2.2 hingegen zu dem ersten Lagerteil 2.1 um die zweite Drehachse 7.2 bewegt werden.

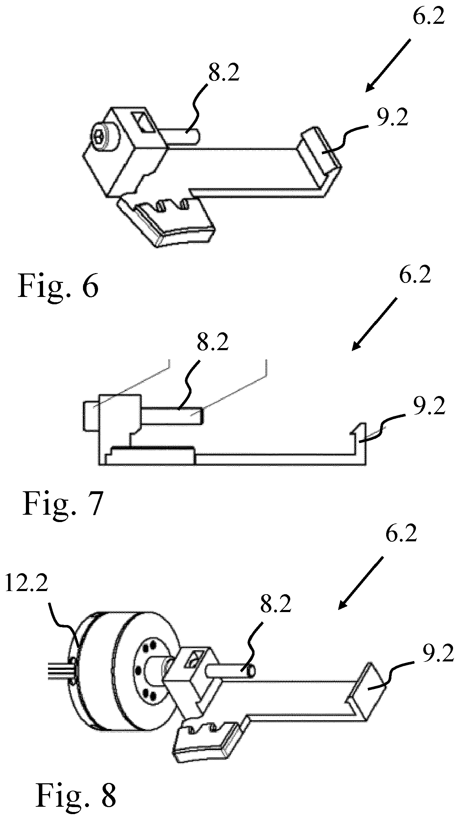

Um das zweite Lagerteil 2.2 relativ zu dem ersten Lagerteil 2.1 zu bewegen, ist eine zweite Einstellvorrichtung 6.2 vorgesehen, welche auch in den Figuren 6 bis 8 dargestellt ist.

Die zweite Einstellvorrichtung 6.2 umfasst ein zweites Gehäuseteil 9.2, welches lösbar an dem ersten Lagerteil 2.1 befestigt ist. Die zweite Einstellvorrichtung 6.2 umfasst ferner ein zweites Einstellelement 8.2, welches als Schraube ausgebildet ist. Das Außengewinde des zweiten Einstellelements 8.2 durchgreift ein in dem zweiten Gehäuseteil 9.2 ausgebildetes Innengewinde, so dass durch eine Drehung des zweiten Einstellelements 8.2 das zweite Einstellelement 8.2 entlang seiner Längserstreckung linear relativ zu dem zweiten Gehäuseteil 9.2 bewegt wird.

Wie insbesondere aus der Figur 2 hervorgeht, ist die zweite Einstellvorrichtung 6.2 so an dem ersten Lagerteil 2.1 angebracht, dass durch einen rotatorischen Antrieb des zweiten Einstellelements 8.2. das zweite Einstellelement 8.2 während seiner durch den rotatorischen Antrieb bedingten linearen Verschiebung das zweite Lagerteil 2.2 zu einer Drehbewegung um die zweite Drehachse 7.2 antreibt.

Wie aus Figur 8 ersichtlich, kann der rotatorische Antrieb des zweiten Einstellelements 8.2 der zweiten Einstellvorrichtung 6.2 auch mittels eines zweiten elektromotorischen Antriebs 12.2 erfolgen. Wenn die erste Einstellvorrichtung und die zweite Einstellvorrichtung 6.2 mittels elektromotorischer Antriebe 12.1 und 12.2 angetrieben werden, wäre es prinzipiell möglich, den Laserscanner 11 vollautomatisch auszurichten, sofern die zugehörigen Feststellelemente 3.1a, 3.1b und 3.2 zuvor in ihren gelösten Zustand überführt wurden.

Mit der vorliegenden Erfindung ist es somit möglich, einen Laserscanner um zwei Freiheitsgrade exakt mittels zweier unabhängiger Einstellvorrichtungen 6.1, 6.2 auszurichten, wobei der Laserscanner 11 im ausgerichteten Zustand sicher mittels entsprechender Feststellelemente 3.1a, 3.1b, 3.2 fixiert ist. Mit der Erfindung werden somit die anfängliche Ausrichtung und eine gegebenenfalls erforderliche Nachjustierung des Laserscanners 11 deutlich vereinfacht.

### Bezugszeichenliste

- 1: Basiselement
- 2.1: erstes Lagerteil
- 2.2: zweites Lagerteil
- 3.1a, 3.1b: erstes Feststellelement
- 3.2: zweites Feststellelement
- 4: Haltevorrichtung
- 5: Sensorvorrichtung
- 6.1: erste Einstellvorrichtung
- 6.2: zweite Einstellvorrichtung
- 7.1: erste Drehachse
- 7.2: zweite Drehachse
- 8.1: erstes Einstellelement
- 8.2: zweites Einstellelement
- 9.1: erstes Gehäuseteil
- 9.2: zweites Gehäuseteil
- 10: Stellelement
- 11: Laserscanner
- 12.1: erster Antrieb
- 12.2: zweiter Antrieb

## Patentansprüche

1. Haltevorrichtung (4) für einen Sensor, umfassend
- ein Basiselement (1) zum Befestigen der Haltevorrichtung an einer Anlage,
- ein erstes Lagerteil (2.1),
- mindestens ein erstes Feststellelement (3.1a, 3.1b) für das erste Lagerteil (2.1), wobei
das mindestens eine erste Feststellelement (3.1a, 3.1b) zwischen einem Fixierungszustand und einem gelösten Zustand überführbar ist und wobei das erste Lagerteil (2.1) in dem gelösten Zustand des mindestens einen ersten Feststellelements (3.1a, 3.1b) relativ zu dem Basiselement (1) bewegbar ist,
**dadurch gekennzeichnet, dass**
die Haltevorrichtung eine erste Einstellvorrichtung (6.1) umfasst, wobei das erste Lagerteil (1) mittels der ersten Einstellvorrichtung (6.1) im gelösten Zustand des mindestens einen ersten Feststellelements (3.1a, 3.1b) bewegbar ist.

2. Haltevorrichtung (4) nach Anspruch 1, wobei das erste Lagerteil (1) im gelösten Zustand des mindestens einen ersten Feststellelements (3.1a, 3.1b) um eine erste Drehachse (7.1) drehbar ist.

3. Haltevorrichtung (4) nach Anspruch 1 oder 2, wobei die Haltevorrichtung ein zweites Lagerteil (2.2) umfasst und dem zweiten Lagerteil (2.2) mindestens ein zweites Feststellelement (3.2) und eine zweite Einstellvorrichtung (6.2) zugeordnet ist.

4. Haltevorrichtung (4) nach Anspruch 2 oder 3, wobei das erste Lagerteil (2.1) im gelösten Zustand des mindestens einen ersten Feststellelements (3.1a, 3.1b) um eine erste Drehachse (7.1) drehbar ist und das zweite Lagerteil (2.2) im gelösten Zustand des mindestens einen zweiten Feststellelements (3.2) um eine zweite Drehachse (7.2) drehbar ist.

5. Haltevorrichtung (4) nach Anspruch 4, wobei das erste Lagerteil (2.1) drehbar an dem Basiselement (1) gelagert ist und das zweite Lagerteil (2.2) drehbar an dem ersten Lagerteil (2.1) gelagert ist.

6. Haltevorrichtung nach 4 oder 5, wobei die erste Drehachse (7.1) und die zweite Drehachse (7.2) in einem rechten Winkel zueinander ausgerichtet sind.

7. Haltevorrichtung (4) nach einem der vorhergehenden Ansprüche, wobei die Einstellvorrichtung (6.1, 6.2) ein rotatorisch betätigbares Einstellelement (8.1, 8.2) umfasst.

8. Haltevorrichtung (4) nach Anspruch 7, wobei das Einstellelement (8.1, 8.2) in einem Gehäuseteil (9.1, 9.2) drehbar gelagert ist, wobei das Gehäuseteil (9.1, 9.2) lösbar an einem Lagerteil (2.1, 2.2) oder dem Basiselement (1) angebraucht ist.

9. Haltevorrichtung (4) nach Anspruch 7 oder 8, wobei das Einstellelement (8.2) durch den rotatorischen Antrieb in seiner axialen Richtung bewegt wird und direkt auf ein Lagerteil (2.2) wirkt.

10. Haltevorrichtung (4) nach Anspruch 7 oder 8, wobei auf dem Einstellelement (8.1) ein Stellelement (10) gelagert ist, welches durch die rotatorische Bewegung des Einstellelements (8.1) linear bewegbar ist, wobei das Stellelement (10) auf ein Lagerteil (2.1) wirkt.

11. Haltevorrichtung (4) nach einem der vorhergehenden Ansprüche, wobei die Einstellvorrichtung (6.1, 6.2) manuell antreibbar ist oder einen Antrieb umfasst.

12. Sensorvorrichtung (5) mit einem Sensor und einer Haltevorrichtung (4) nach einem der vorhergehenden Ansprüche, an dem Sensor angebracht ist.

13. Sensorvorrichtung (5) nach Anspruch 12, wobei der Sensor als Laserscanner (11) ausgebildet ist.

14. Sensorvorrichtung (5) nach Anspruch 12 oder 13, wobei die Haltevorrichtung (4) nach einem der Ansprüche 3 bis 6 ausgebildet ist, wobei der Sensor an dem zweiten Lagerteil (2.2) befestigt ist.

15. Fahrerloses Fahrzeug mit mindestens einer Sensorvorrichtung (5) nach einem der Ansprüche 12 bis 14.
